**Europäisches Patentamt**

**European Patent Office**

**Office européen des brevets**

(19)

(11) Veröffentlichungsnummer: **0 181 604**
**A2**

(12) ## EUROPÄISCHE PATENTANMELDUNG

(21) Anmeldenummer: **85114144.0**

(22) Anmeldetag: **06.11.85**

(51) Int. Cl.⁴: **B 68 G 7/00**
**B 29 C 67/22**
**//B29L31:58**

(30) Priorität: **09.11.84 DE 3440963**

(43) Veröffentlichungstag der Anmeldung:
**21.05.86 Patentblatt 86/21**

(84) Benannte Vertragsstaaten:
**DE FR GB IT SE**

(71) Anmelder: **METZELER SCHAUM GMBH**
**Donaustrasse 51**
**D-8940 Memmingen(DE)**

(72) Erfinder: **Giese, Ralf**
**Am Bruch 1**
**D-5353 Mechernich(DE)**

(72) Erfinder: **Meuer, Valentin, Dr.**
**Stifterstrasse 1**
**D-8941 Buxheim(DE)**

(74) Vertreter: **Michelis, Theodor, Dipl.-Ing.**
**Gneisenaustrasse 15**
**D-8000 München 50(DE)**

(54) Verfahren zur Herstellung von Fahrzeugsitzen.

(57) Zur Herstellung von Vollschaum-Fahrzeugsitzen mit einem aus luftundurchlässigen Material bestehenden Sitzbezug ist erfindungsgemäß vorgesehen, daß die einzelnen Bezugsteile des Sitzbezuges als textiles Flächengebilde mit einer auf der Rückseite aufkaschierten Schicht aus einem HFschweißfähigen Schaum und einer PU-Folie hergestellt und durch HF-Verschweißung ihrer aufeinander gelegten Kanten zu einem vollständigen Sitzbezug verbunden werden, der in die Schäumform eingelegt und anschließend ausgeschäumt wird.

FIG. 3

METZELER SCHAUM GMBH          München, den 4.11.1985
Memmingen                     Unser Zeichen:MS 173 P 84 EP


Verfahren zur Herstellung von Fahrzeugsitzen
‾‾‾‾‾‾‾‾‾‾‾‾‾‾‾‾‾‾‾‾‾‾‾‾‾‾‾‾‾‾‾‾‾‾‾‾‾‾‾‾‾‾‾‾‾‾‾


Die Erfindung betrifft ein Verfahren zur Herstellung von Fahrzeugsitzen durch Ausschäumen eines aus einem luftundurchlässigen Material bestehenden Sitzbezuges, der aus mindestens 2 Bezugsteilen zusammengesetzt und durch Unterdruck in eine Schäumform gepreßt und positioniert wird.

Ein derartiges Verfahren ist aus der DE-PS 26 41 209 bekannt. Danach werden die einzelnen Teile des Sitzbezuges, der aus einem luftundurchlässigen Material, z. B. ein geeignetes Plastikmaterial, besteht, an ihrem zusammenzufügenden Kanten miteinander vernäht, der Sitzbezug dann mit seiner Unterkante auf ein Basisteil aus Karton aufgenäht, alle vernähten Kanten durch ein Dichtungsband luftundurchlässig gemacht und der so fertiggestellte Bezug unter Vakuum in eine Schäumform eingezogen und anschließend hinterschäumt.

Die Herstellung eines derartigen Vollschaumsitzes ist jedoch sehr aufwendig und arbeitsintensiv und bedarf vieler einzelner Operationen zur Vorbereitung des dann im Prinzip sehr einfachen Hinterschäumens. Das wesentliche Problem dieser aufwendigen Herstellung liegt darin, daß die verwendeten Materialien für den Sitzbezug nicht oder in einem nur sehr geringen Umfang elastisch dehnbar sind und daher nicht ohne weiteres derart starken Dehnungen unterworfen werden können, wie sie in einer Vakuum-Hinterschäumform erforderlich sind, so daß der Sitzbezug vorher in seiner ursprünglichen Gestalt konfektioniert werden muß.

Bei der Verwendung hochdehnbarer Stoffe ergibt sich andererseits wieder die Schwierigkeit, daß diese Stoffe luftundurchlässig gemacht werden müssen, was zwar durch Aufkaschieren einer hochelastischen PU-Folie geschehen kann. Hierbei ergeben sich aber beim Vernähen der einzelnen Bezugsteile wiederum Luftdurchtrittsöffnungen, die vor einer Verwendung in einer Vakuumform zusätzlich abgedichtet werden müssen. Außerdem ist der Sitzkomfort eines derartigen Sitzes, bei dem direkt hinter den Bezugsstoff eine luftundurchlässige Folie kaschiert ist, nicht sehr hoch.

Der vorliegenden Erfindung liegt daher die Aufgabe zugrunde, ein Verfahren anzugeben, mit dem derartige Fahrzeugsitze als Vollschaumsitze durch Hinterschäumen des Sitzbezuges auf einfache Weise hergestellt werden können, wobei der Sitzbezug auch ohne zusätzliche Verfahrensschritte luftdicht ist und damit ohne weiteres in eine Vakuum-Hinterschäumform eingezogen werden kann, bei dem der Sitz andererseits aber auch einen optimalen Sitzkomfort ohne Schwitzneigung gewährleistet.

Zur Lösung dieser Aufgabe ist, ausgehend von dem eingangs genannten Stand der Technik, erfindungsgemäß vorgesehen, daß die Bezugsteile als textiles Flächengebilde mit einer auf der Rückseite aufkaschierten Schicht aus einem HFschweißfähigen Schaum und einer PU-Folie hergestellt und durch HF-Verschweißung ihrer aufeinandergelegten Kanten zu einem vollständigen Sitzbezug verbunden werden, der in die Schäumform eingelegt und anschließend ausgeschäumt wird.

Zweckmäßigerweise wird dabei bei einem aus 3 Bezugsteilen bestehenden Sitzbezug für das mittlere Bezugsteil ein unelastisches, und für die beiden außenliegenden Bezugsteile ein hochelastisches textiles Flächengebilde verwendet.

Durch die Verwendung eines trilaminaten Bezuges aus einem atmungsaktiven Textil, einem auf der Rückseite aufkaschierten HF-schweißfähigem Schaum und einer aufkaschierten PU-Folie ergibt sich somit ein Sitzbezug, dessen einzelne Teile einfach durch Aufeinanderlegen und HF-Verschweißung dauerhaft miteinander verbunden werden können, ohne daß dabei luftdurchlässige Stellen, wie beispielsweise bei dem bisher üblichen Vernähen auftreten.

Anhand einer schematischen Zeichnung sind Aufbau und Wirkungsweise eines Ausführungsbeispiels nach der Erfindung näher erläutert. Dabei zeigen

Fig. 1    einen  Querschnitt durch 2 benachbarte Bezugsteile

Fig. 2    eine Aufsicht auf einen zusammengefügten Sitzbezug, und

Fig. 3    einen Querschnitt durch eine Schäumform mit eingelegtem Sitzbezug

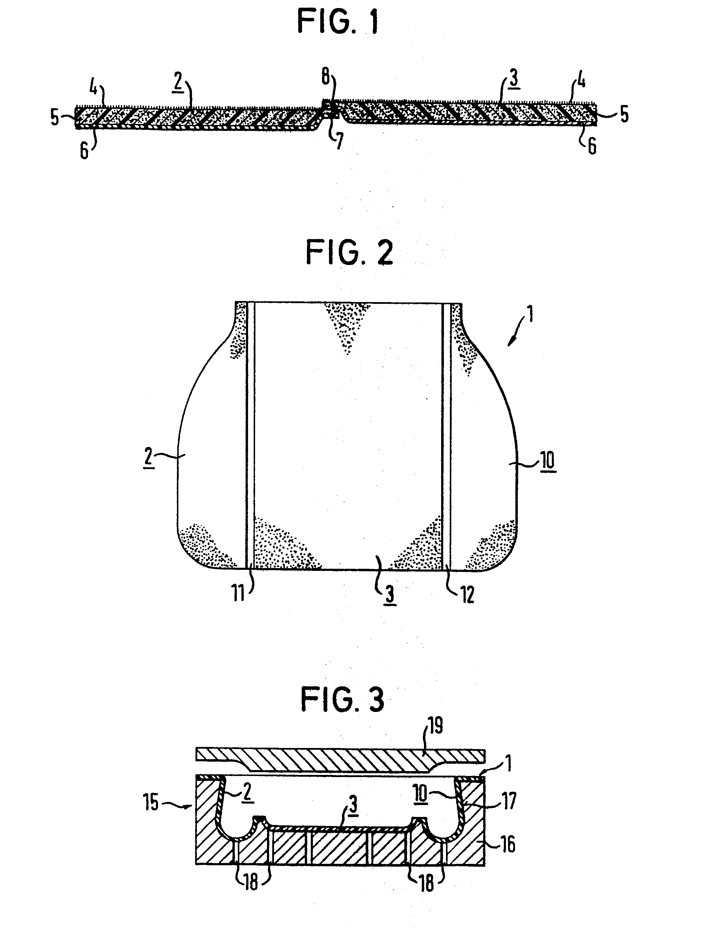

Wie aus dem Teilquerschnitt nach Fig. 1 hervorgeht, besteht jedes Sitzbezugsteil 2 oder 3 aus einem oberseitigen textilen Flächengebilde 4, das in üblicher Weise luftdurchlässig ist, einer auf der Rückseite durch Flammkaschieren aufgebrachten Schaumstoffschicht 5 aus einem bekannten, hochfrequenzschweißbaren Schaumstoff und einer unterseitig aufkaschierten luftdichten PU-Folie 6. Die beiden Bezugsteile 2 und 3 sind nunmehr an ihren Kanten 7 bzw. 8 aufeinandergelegt und durch HF-Verschweißung luftdicht miteinander verbunden. Durch das thermoplastische Erweichen der zwischengelegten Schaumstoffbahnen während der HF-Verschweißung folgt dabei eine dichte Verbindung von Oberstoff 4 und PU-Folie 6 des Bezugsteiles 3 einerseweits sowie der entsprechenden

Schichten des Bezugsteiles 2 andererseits und beider Schichten miteinander.

Wie aus der Aufsicht aus Fig. 2 zu ersehen ist, besteht der Sitzbezug 1 insgesamt aus 2 außenliegenden Bezugsteilen 2 und 10, mit einem hochelastischen Bezugsstoff und einem mittleren Bezugsteil 3 aus einem unelastischen Bezugsstoff, die an ihren jeweiligen Berührungskanten 11 und 12 durch HF-Verschweißung miteinander verbunden sind. Die Verwendung hochelastischer Materialien für die beiden außenliegenden Bezugsteile 2 und 10 ist deswegen vor Vorteil, weil diese Bereiche beim Einziehen durch Vakuum in der Schäumform sehr stark verformt werden, während das mittlere Bezugsteil 3 wenig verformt wird, andererseits aber auch der die eigentliche Belastung des fertigen Sitzes aufnehmende Bereich ist und daher ohne Faltenbildung eine gewisse Straffheit aufweisen muß.

Der so fertiggestellte Sitzbezug wird dann in eine Schäumform 15, entsprechend Fig. 3, eingelegt. Diese Schäumform 15 besteht aus einem Unterteil 16, in die die Kontur 17 des fertigen Sitzes eingelassen ist und die entsprechende Bohrungen 18 zum Anlegen des erforderlichen Vakuums aufweist. Nach Einlegen des Sitzbezuges 1 wird dann dieser Bezug durch entsprechendes Absaugen genau der Kontur 17 angepaßt, wobei hier deutlich zu ersehen ist, daß die außenliegenden Bezugsteile 2 und 10 besonders starken Dehnungen und Verformungen unterzogen werden. Nach Einbringen des Reaktionsgemisches für das eigentliche Sitzpolster wird dann der Deckel 19 der Schäumform 15 geschlossen und nach Aufschäumen und Ausreagieren kann dann der fertige Sitz entnommen werden.

METZELER SCHAUM GMBH

Memmingen

München, den 4.11.1985
Unser Zeichen: MS 173 P 84 EP

Patentanspruch

Verfahren zur Herstellung von Fahrzeugsitzen durch Ausschäumen einer luftundurchlässigen Sitzauflage, die aus einem luftdurchlässigen textilen Flächengebilde, einer luftundurchlässigen PUR-Folie und einer Zwischenlage aus einer Weichschaumstoff-Folie besteht, dadurch gekennzeichnet, daß bei einer aus drei Teilen bestehenden Sitzauflage das textile Flächengebilde der beiden außenliegenden Teile aus einem hochelastischen Material und der mittlere Teil aus einem unelastischen Material verwendet werden, die auf eine HF-schweißfähige, luftdurchlässig Weichschaumstoff-Folie sowie die PUR-Folie aufkaschiert und durch HF-Verschweißung ihrer aufeinandergelegten Kanten zu einer vollständigen Sitzauflage verbunden werden, die anschließend in die Schäumform eingelegt und ausgeschäumt wird.

## FIG. 1

## FIG. 2

## FIG. 3